(19) Europäisches Patentamt
European Patent Office
Office européen des brevets

(11) **EP 3 717 528 B1**

(12) **EUROPEAN PATENT SPECIFICATION**

(45) Date of publication and mention of the grant of the patent:
**25.05.2022 Bulletin 2022/21**

(21) Application number: **18816418.0**

(22) Date of filing: **26.11.2018**

(51) International Patent Classification (IPC):
***C08F 214/26*** (2006.01)

(52) Cooperative Patent Classification (CPC):
**C08F 214/262**

(86) International application number:
**PCT/US2018/062419**

(87) International publication number:
**WO 2019/104262 (31.05.2019 Gazette 2019/22)**

(54) **TFE/PAVE-COPOLYMER FOR SHAPE MEMORY MOLDED ARTICLE AND SHAPE MEMORY MOLDED ARTICLE**

COPOLYMER AUS TFE UND PAVE FÜR ARTIKEL MIT FORMGEDÄCHTNISEFFEKT UND DARAUS GEFORMTER ARTIKEL

COPOLYMÈRE DE TFE ET PAVE POUR LA FABRICATION D'ARTICLES AVEC MÉMOIRE DE FORME ET ARTICLE MOULÉ À PARTIR DE CE COPOLYMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.11.2017 JP 2017226608**

(43) Date of publication of application:
**07.10.2020 Bulletin 2020/41**

(73) Proprietor: **Chemours-Mitsui Fluoroproducts Co., Ltd.**
**Tokyo 105-0001 (JP)**

(72) Inventors:
• **MIYAMAE, Kohei**
**Shizuoka-Shi**
**Shizuoka 424-8631 (JP)**

• **MUGISAWA, Masaki**
**Shizuoka-Shi**
**Shizuoka 424-8631 (JP)**

(74) Representative: **Morf, Jan Stefan et al**
**Abitz & Partner**
**Patentanwälte mbB**
**Arabellastrasse 17**
**81925 München (DE)**

(56) References cited:
**EP-A2- 2 902 423      WO-A1-98/11146**
**JP-B2- 6 150 483      US-A1- 2016 185 995**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to the use of a material for a shape memory molded article, the material containing a heat-fusible perfluoro resin and exhibiting superior shape memory capability even at low temperature, and a shape memory molded article.

### BACKGROUND

Resins exhibiting shape memory capabilities use the fact that parameters such as elastic modulus vary widely with glass transition temperature and crystal melting point as boundaries, to achieve shape fixation and shape recovery, and are used in a broad range of applications such as medical materials, building materials, materials for vehicles, materials for machinery, based on this characteristic.

Norbornenes, trans polyisoprenes, styrene-butadiene copolymers, and polyurethane type polymers are known as resins that exhibit shape memory capabilities. In these polymers, a pseudo crosslinking point, such as a crosslinking point, entanglement site, and a site having high mobility and a low glass transition point coexist in the polymer structure, thus realizing shape fixation and recovery at approximately 40°C or lower.

On the other hand, because fluororesins combine high heat resistance, electrical insulating properties, low dielectric constants, and chemical resistance, said resins are used in a broad range of fields, including chemistry, machinery, electric machinery. The aforementioned characteristics (heat resistance, electrical insulating properties, low dielectric constants, chemical resistance) are particularly superior in perfluoro resins in which hydrogen in the molecular chain is entirely replaced with fluorine, and, among these resins, heat-fusible perfluoro resins exhibiting melt flow at or above a transition temperature (melting point or glass transition temperature) can easily be molded using existing molding methods, and are thus processed into a variety of parts, such as tubes, sheets, fittings, and used in a variety of applications.

Heat-fusible perfluoro resins that exhibit shape memory capabilities (for example, PFA and FEP) correspond to crystalline polymers, and are thought to have shape memory capabilities in temperature regions at or below the melting points thereof due to crystalline components that act as pseudo crosslinks with glass transition points as transition points. Incidentally, the glass transition temperature of heat-fusible perfluoro resins is very high at close to 90 to 100°C, and thus said resins cannot be used to perform shape fixation or recovery in temperature ranges encountered in daily life, such as body temperature, hot air or hot water.

For example, the FEP heat shrinkable tube disclosed in Patent Document 1 returns to an original shape when heated to 150°C or above. Furthermore, the PFA heat shrinkable tube disclosed in Patent Document 2 performs heat shrinking when heated to 380°C and 300°C.

Accordingly, up to now, it has not been possible to use normal heat-fusible perfluoro resins in product applications used in everyday life, such as, for example, applications like self-supporting handles and grips for universal spoons and scissors and easy dismantling screws.

### PRIOR ART DOCUMENTS

#### Patent Documents

Patent Document 1: Japanese Examined Patent Application Publication No. S58-15294
Patent Document 2: Japanese Patent No. 3806291

### SUMMARY

### Problem to Be Resolved by the Invention

Thus, an object of the present invention is to provide a material for a shape memory molded article containing a heat-fusible perfluoro resin having heat resistance, electrical insulating properties, a low dielectric constant, and chemical resistance, and that exhibits superior shape memory capabilities (shape retention capabilities and shape recovery capabilities), and a shape memory molded article.

**Means for Resolving Problems**

As a result of extensive research into resolving the problem described above, the inventors discovered that a heat-fusible perfluoro resin with a glass transition temperature in the range of 10 to 60°C has superior characteristics as a material for a shape memory molded body exhibiting shape memory capabilities even at temperatures 30 to 100°C, which discovery led to the present invention.

The present invention is defined in the apended claims.

**Effect of the Invention**

The shape memory molded article according to the present invention expresses heat resistance, electrical insulating properties, a low dielectric constant, chemical resistance, as well as, superior shape memory capabilities (shape retention capabilities and shape recovery capabilities).

Because the molded article according to the present invention exhibits superior shape memory capabilities even at low temperatures, the article can be suitably used especially in product applications used in everyday life, such as self-supporting handles and grips for universal spoons and scissors, and easy dismantling screws.

**DETAILED DESCRIPTION**

The present invention will be described in detail below.

A heat-fusible perfluoro resin, which is a material for a shape memory molded article according to the present invention, has a glass transition temperature in the range of 10 to 60°C, melts and exhibits fluidity when a transition temperature (melting point or glass transition temperature), and is a perfluoro resin in which hydrogen in the molecular chain is entirely replaced by fluorine.

In the present invention, the glass transition temperature of the heat-fusible perfluoro resin is in the range of 10 to 60°C, preferably 20 to 60°C, and more preferably 30 to 60°C. When the glass transition temperature is too low, there is a risk that it will be impossible to apply a temperature change with the glass transition temperature as boundary, and that shape fixation and recover will thus not be expressed.

Specifically, in the present invention, the heat-fusible perfluoro resin is a copolymer of tetrafluoroethylene (TFE) and perfluorocomonomer (a monomer not containing hydrogen that can be further polymerized), and one type, or two or more types, of perfluorocomonomer may be used. The amount of perfluorocomonomer in the copolymer is 5 to 40 mol%, more preferably 5 to 30 mol%, even more preferably 10 to 30 mol%, and most preferably 10 to 25 mol%. The copolymer of tetrafluoroethylene and perfluorocomonomer can be selected from tetrafluoroethylene · perfluoro (alkyl vinyl ether) copolymers (PFA), tetrafluoroethylene · hexafluoropropylene copolymers (FEP), and tetrafluoroethylene · hexafluoropropylene · perfluoro (alkyl vinyl ether) copolymers, with PFA being preferred from the perspective of heat resistance.

When said copolymer is a PFA, the perfluoroalkyl vinyl ether in said PFA preferably has an alkyl group having 1 to 5 carbon atoms, while perfluoromethyl vinyl ether (PMVE), perfluoro (ethyl vinyl ether) (PEVE), and perfluoro (propyl vinyl ether) (PPVE) are more preferable, with PEVE being particularly preferable.

PEVE is preferable as the perfluorocomonomer according to the present invention because it can be uniformly introduced into a molecule chain easily, is rarely incorporated into a lamella in a crystal because a side chain is not too short, can obtain an amorphous portion large enough for deformation, and enables attainment of an effect where the glass transition temperature is lowered to a suitable range.

While the heat-fusible perfluoro resin according to the present invention can be obtained through a known method, polymerization in a liquid through dispersion polymerization is preferred, while emulsion polymerization using water as a liquid medium is preferable from an environmental perspective. A solvent containing fluorine can also be used in combination in order to provide a copolymer having a uniform composition.

While emulsion polymerization can be performed across a broad range of temperatures, a relatively high temperature in the range of 50 to 110°C is advantageous, and a temperature in the range of 70 to 90°C is preferred, because of heat transfer problems and the use of thermally activated initiators. Surfactants used in emulsion polymerization have a tendency to lose dispersion stability when heated excessively.

A suitable surfactant can be used in the water-based emulsion polymerization of the heat-fusible perfluoro resin (especially PFA) according to the present invention. Specifically, it is preferable to use ammonium perfluorooctanoate (C-8), ammonium perfluorononanoate (C-9), the perfluoroalkyl ethanesulfonic acid and salts thereof disclosed in US 4,380,618, and the fluoropolyether acid and the salt surfactant disclosed in JP 5588679.

A water-soluble free radical initiator like ammonium persulfate (APS), potassium persulfate (KPS), or disuccinic acid peroxide, or, a redox type initiator like one based on potassium permanganate can be used as an initiator for the water-based emulsion polymerization.

A chain transfer agent (CTA) can by be used in the water-based emulsion polymerization of the heat-fusible perfluoro resin (especially PFA) according to the present invention. A wide range of compounds can be used as the CTA. For example, a compound containing hydrogen, such as molecular hydrogen, a lower alkane, or a lower alkane substituted with halogen atoms can be used. A CTA can generate a comparatively stable end group, based on the structure of said CTA. Examples of preferable CTAs include methane, ethane, and methyl chloride, as well as, substituted hydrocarbons, such as methylene chloride, chloroform, and carbon tetrachloride. The amount of CTA used to achieve a desired molecular weight under specific polymerization conditions depends on the amount of initiator used and the chain transfer efficiency of the selected CTA. Chain transfer efficiency varies considerably from compound to compound, and also varies with temperature.

As is disclosed in US 3,635,926, a more stable amide end group can be provided by adding a basic buffer such as ammonium carbonate or ammonia (ammonium hydroxide).

Water, a surfactant, CTA (if used), and a comonomer are put into a reaction vessel and then heated to a selected temperature, stirring is begun, and then, an initiator solution is added at a prescribed rate to thus start polymerization. A drop in pressure serves as an indicator that polymerization has begun. Next, the addition of TFE is begun, and the addition (injection) and pressure of the TFE are controlled to regulate the polymerization. An initiator solution, which may be the same as or different than the first initiator solution, is typically added through a reaction. The perfluorocomonomer may be added to the reaction container in advance or may added by injection after the polymerization has begun in the same manner as the TFE. The rate at which the perfluorocomonomer is added may be uniform or non-uniform (variable).

Additionally, the polymerization can be controlled through the stirring speed and pressure inside the reaction container. While higher pressure enhances reaction speed, TFE polymerization generates heat and thus a high reaction speed will increase heat generation such that consideration must be given to removing said heat. The pressure used is determined based on device design and safety problems in the handling of TFE, and it is known with respect to water-based emulsion polymerization of TFE copolymers that pressures in the range of approximately 0.3 to 7 MPa are typical, while pressures in the range of 0.7 to 3. 5 MPa are more typical. While a fixed pressure is typically maintained within the reaction container, the pressure can also be varied.

Furthermore, in the present invention, a filler or a variety of resin additives (antistatic agents, light stabilizers, coloring agents, lubricants) can be added to the heat-fusible perfluoro resin as needed so long as doing so does not hinder the object of said resin. A variety of organic and inorganic fillers can be used as the filler based on the characteristics sought, and examples thereof include metal powders, metal fibers, carbon black, carbon fibers, silicon carbide, glass fibers, glass beads, glass flakes, graphite, heat-resistant resins (for example, polytetrafluoroethylene, polyphenylene sulfide, polyimide, polyamideimide, polyethersulfone, polyetheretherketone, aromatic polyamides).

The temperature at which the shape memory molded article molded from the material for a shape memory molded article according to the present invention exhibits shape memory capabilities (shape retention capabilities and shape recovery capabilities) is in the range of 30 to 100°C, preferably in the range of 50 to 100°C, more preferably in the range of 60 to 100°C, and even more preferably in the range of 70 to 100°C.

The shape memory molded article according to the present invention can be deformed into a desired shape by being heated in the range of 30 to 100°C, the article can be fixed and maintained (shape retention capabilities) in the deformed shape by being cooled, and can then be returned to an original shape prior to deformation by being re-heated in the range of 30 to 100°C (shape recovery capabilities). The shape memory molded article according to the present invention can have either an un-deformed shape (original shape) or a deformed shape (desired shape).

The shape memory molded article according to the present invention can be obtained using a conventionally known molding process. First, when molding a molding having an un-deformed shape (original shape), said molding can be obtained through a known melt molding method such as, for example, melt extrusion molding, injection molding, blow molding, transfer molding, melt compression molding, after raising the heat-fusible perfluoro resin to or above a melting point, or, in the case of a non-crystalline resin (including resins having slight crystallinity), to a sufficiently high temperature (preferably + 60°C or more, and, more preferably, + 100°C or more above the glass transition temperature) above the glass transition temperature thereof, and thus completely melting the heat-fusible perfluoro resin. A molding having a deformed shape (desired shape) can be obtained by heating the obtained molding having the un-deformed shape (original shape) to a range of 30 to 100°C and then applying an external force thereto. Furthermore, when changing the molding to the deformed shape (desired shape), a range from the glass transition temperature minus 5°C (more preferably the glass transition temperature) to the glass transition temperature plus 60°C (more preferably the glass transition temperature + 50°C) is preferred. This range is preferred because shape memory and recoverability are better in this range because an intertwined portion or a microcrystalline portion acting as a pseudo crosslinking point for shape memory and recoverability is more readily sustained.

The heating temperature when the shape memory molded article according to the present invention is deformed into a desired shape is preferably on a high end within the range of from the glass transition temperature to the glass transition temperature plus 60°C, particularly in a case where the heat-fusible perfluoro resin is a non-crystalline resin not exhibiting a melting point, because, at said temperature, high shape retention capabilities can be obtained while the intertwined portion or microcrystalline portion acting as a pseudo crosslinking point for shape memory and recoverability is sustained.

Meanwhile, from the perspective of shape recovery capabilities, the heating temperature when recovering from the deformed shape (desired shape) to the un-deformed shape (original shape) is preferably the glass transition temperature or above, while said temperature is more preferably the same as, or somewhat higher than, the heating temperature when the molding was deformed to the desired shape.

It is preferable that the heat-fusible perfluoro resin used in the present invention exhibit a melting point. The presence of a melting point means that a crystal phase is present, which phase acts as a physical crosslinking point for shape memory, which, in turn, leads to superior shape retention capabilities (shape retention capabilities and shape recovery capabilities).

It is preferable that a heat of fusion for the heat-fusible perfluoro resin used in the present invention be 5 J/g or less. When the heat of fusion is 5 J/g or less, a moving part for changing the shape of the molding when changing the shape memory molded article according to the present invention to the deformed shape (desired shape), and when using heat to return the article to the un-deformed shape (original shape), leads to superior shape memory capabilities (shape retention capabilities and shape recovery capabilities) because an amorphous part capable of adequate free rotation is secured.

It is preferable that the shape memory molded article according to the present invention exhibit shape memory capabilities in a range from the glass transition temperature minus 5°C (more preferably the glass transition temperature) to the glass transition temperature plus 60°C (more preferably the glass transition temperature + 50°C). This range is preferred because shape memory and recoverability are better in this range because an intertwined portion or a microcrystalline portion acting as a pseudo crosslinking point for shape memory and recoverability is more readily sustained.

While applications for the shape memory molded article according to the present invention are not particularly limited, because the article is characterized by the fact that it has superior shape memory capabilities even at low temperatures, the article can be suitably used in product applications used in everyday life, such as self-supporting handles and grips for universal spoons and scissors and easy dismantling screws.

## EXAMPLES

The present invention will be described below in more specific terms using examples and comparative examples, but is not intended to be limited thereto.

The heat-fusible perfluoro resin obtained using the following preparation example was used in the present embodiment.

## Heat-fusible Perfluoro Resin

## Preparation Example 1

A dispersion of a tetrafluoroethylene · perfluoroethyl vinyl ether (TFE · PEVE) copolymer was prepared through a method in accordance with Examples 1 through 3 disclosed in Japanese Patent No. 5588679, using perfluoroethyl vinyl ether (PEVE) in place of perfluoropropyl vinyl ether (PPVE).

In detail, an ammonium salt of a fluoro monoether acid expressed as $CF_3CF_2CF_2OCF(CF_3)COOH$ (I), and an ammonium salt of a perfluoropolyether acid (PFPEA) expressed as $C_3F_7O(CFCF_3CF_2O)_nCFCF_3COOH$ (II), having a number average molecular weight of approximately 1500, were used as surfactants for water-based emulsion polymerization.

2400 mL of deionized water was degassed in a 1 gallon (3.8 L) reactor having horizontal stirring vanes by purging using a vacuum and nitrogen. 0.05 g of the ammonium salt of the perfluoropolyether acid (PFPEA) of the aforementioned formula (II) and 8.0 g of the ammonium salt of the fluoro monoether acid of the aforementioned formula (I) were added to a reactor under atmospheric pressure. A stirrer was operated at 161 rpm, a temperature was raised to 85°C, and ethane was supplied to the reactor until a reactor pressure rose to 0.03 MPa. Then, 132 g of perfluoroethyl vinyl ether (PEVE) was supplied into the reactor. Then, the reactor was pressurized to 2.06 MPa using tetrafluoroethylene (TFE). Next, 40 mL of a 6.5 g / L ammonium persulfate (APS) aqueous solution was supplied into the reactor as an initiator. After a reaction initiation indicated by a 0.03 MPa drop in pressure, the same initiator aqueous solution and PEVE were supplied at the rates of 0.5 mL/min and 0.9 g/min, respectively, TFE was then supplied, and a pressure of 2.06 MPa was sustained. All adding and stirring stopped 135 minutes after reaction start. Thereafter, the reactor was degassed and a dispersion of a product was collected.

A solids content of the obtained dispersion was 19.5 wt%.

After the obtained dispersion was stirred and aggregated to obtain an aggregate, the aggregate was dried for 12 hours at 280°C, and thus a powdered TFE PEVE copolymer was obtained.

**Preparation Example 2**

Except that 175 g of PEVE was added and the same initiator solution and PEVE were supplied at the rates of 0.5 mL/min and 1.2 g/min, respectively, polymerization was performed using the same method used for Preparation Example 1. A solids content of the obtained dispersion was 18.7 wt%.

**Preparation Example 3**

Except that 265 g of PEVE was added and the same initiator solution and PEVE were supplied at the rates of 0.26 mL/min and 1.6 g/min, respectively, polymerization was performed using the same method used for Preparation Example 1. A solids content of the obtained dispersion was 11. 2 wt%.

**Preparation Example 4**

2200 mL of deionized water was degassed in a 1 gallon (3.8 L) reactor having horizontal stirring vanes by purging using a vacuum and nitrogen. 0.12 g of the ammonium salt of the perfluoropolyether acid (PFPEA) of the aforementioned formula (II) and 7.0 g of the ammonium salt of the fluoro monoether acid of the aforementioned formula (I) were added to a reactor under atmospheric pressure. A stirrer was operated at 128 rpm, a temperature was raised to 85°C, and ethane was supplied to the reactor until a reactor pressure rose to 0.03 MPa. Then, 80 g of perfluoroethyl vinyl ether (PEVE) was supplied into the reactor. Then, the reactor was pressurized to 1.90 MPa using tetrafluoroethylene (TFE). Next, 70 mL of a 1.75 g / L ammonium persulfate (APS) aqueous solution was supplied into the reactor as an initiator. After a reaction initiation indicated by a 0.03 MPa drop in pressure, the same initiator aqueous solution and PEVE were supplied at the rates of 0.4 mL/min and 0.6 g/min, respectively, TFE was then supplied, and a pressure of 1.9 MPa was sustained. All adding and stirring stopped 88 minutes after reaction start. Thereafter, the reactor was degassed and a dispersion of a product was collected.
A solids content of the obtained dispersion was 21.1 wt%.

**Physical Properties of the Heat-fusible Perfluoro Resin**

The physical properties of the heat-fusible perfluoro resins obtained in Preparation Examples 1 through 4 were measured using the following method. The results are shown in Table 1.

**Comonomer content**

A target heat-fusible perfluoro resin was derived in accordance with the method disclosed in US 5760151 from an infrared absorption spectrum of a film approximately 50 micrometres thick obtained after being melt compression molded at a predetermined temperature (same as the embodiments).

**Differential scanning calorimetry (melting point and heat of fusion)**

A Differential Scanning Calorimeter (Pyris 1 Model DSC, manufactured by PerkinElmer Co., Ltd.) was used.
10 mg of the target heat-fusible perfluoro resin was stirred and then put in a specialized aluminum pan, which was crimped using a specialized crimper, placed in the DSC body, and the temperature of body was then raised 10°C/min from 150°C to 360°C. After a sample was held at 360°C for one minute, the temperature thereof was reduced 10°C/min to 150°C, and then raised again to 360°C after being held at 150°C for one minute. With a temperature showing a melting peak on a melting curve obtained at this time as a melting point, heat of fusion ($\Delta$ Hm) was derived from a peak area established by connecting a point where the curve separates from a base line before and after a melting peak and a point where the curve returns to the base line.
When no melting peak was visible, it was determined that there was no melting point.

**Dynamic viscoelasticity measurement (glass transition temperature)**

After the target heat-fusible perfluoro resin was melt compression molded at a predetermined temperature (same as the embodiments), a 45 mm $\times$ 12.5 mm (height $\times$ width) measurement sample was cut from a 0.8 mm to 2.0 mm thick film obtained by cooling the resin. A temperature rise of 5°C/min from -40°C to 200°C was measured while a measurement frequency was fixed at 1Hz using a parallel plate mode of a dynamic viscoelasticity measuring device (common name ARES, manufactured by Rheometric Scientific F. E.), and a temperature where a loss tangent (tan$\delta$) indicates a maximum peak was taken as the glass transition temperature.

**Shape Memory Molded Article**

**Examples 1 through 3**

The perfluoro resins obtained in from Preparation Examples 1 through 3 were put in a mold, were held in a pressurized state for 20 minutes while being melted at the temperature (melt compression molding temperature) shown in Table 1 at a pressure of 7 to 9 MPa using a compression molding device (Hot Press WFA-37, manufactured by SHINTO Metal Industries Corporation), and were then cooled with water, to thus obtain a sheet approximate 1 mm thick and approximately 5 mm wide. (Melt Compression Molding Method)

The obtained sheet was cut into the dumbbell shape set forth in ASTMD 1708, and then clamped and fixed in chucks of a tensile testing machine having a thermostatic bath (Tensilon RTC-1310, manufactured by A&D Co., Ltd.), with a distance between the chucks set at 22 mm (initial length). Clamped in the chucks, the sheet was heated for 15 minutes in the thermostatic bath set (during deformation) to the temperatures (35°C, 50°C, 70°C, and 90°C) disclosed in Table 1, and then, the sheet was pulled at a speed of 50 mm/min, and pulling was completed the distance between the chucks reached 44 mm (pulled length), which is twice the length of the original length. After that, the sheet was immediately removed from the thermostatic bath, and then, cooled at room temperature (24°C) for one hour to thus obtain a dumbbell shaped sheet.

**Comparative Example 1**

Other than the fact that the perfluoro resin obtained from Preparation Example 4 was used, a dumbbell shaped sheet was obtained using the same method used in Examples 1 through 3.

**Evaluation of Shape Memory Capabilities**

The shape memory capabilities of the obtained dumbbell shaped sheet were evaluated using the following method. The results are shown in Table 1.

**Measurement of shape retention rate**

In Examples 1 through 3 and Comparative Example 1, the chucks were removed from the lower side of the dumbbell shaped sheets after the sheets had been cooled and left to sit for one hour at room temperature, and then, the sheets were left to sit for one hour at room temperature. After the sheets were left to sit, the length (lengths after being held for one hour) of a part equivalent to the distance between the chucks was measured, and shape retention rate was calculated suing the following calculation formula.

$$\text{Shape retention rate (\%)} = 100 - \text{natural recovery rate}$$

$$\text{Natural recovery rate (\%)} = (\text{pulled length} - \text{length after one hour of}$$

$$\text{holding}) / (\text{pulled length} - \text{initial length}) \times 100$$

**Measurement of shape recovery rate**

In Examples 1 through 3 and Comparative Example 1, the chucks were removed from the lower side of the dumbbell shaped sheets after the sheets had been cooled and left to sit for one hour at room temperature, and then, the sheets were heated, while being clamped in the chucks on the upper side thereof, for one hour (during recovery) in the thermostatic bath set to the temperatures (35°C, 50°C, 70°C, and 90°C) disclosed in Table 1. After heating, the length (length after heating and recovery) of a part equivalent to the distance between the sheet chucks was measured, and shape recovery rate was calculated suing the following calculation formula.

Shape recovery rate (%) = (pulled length − length after heating and recovery) / (pulled length − initial length) x 100.

**Table 1**

| Molding (resin) | Comonomer content | Glass transition temperature | Melting point | Heat of fusion $\Delta hm$ | Melt compression press temperature. | Heating conditions (during deformation) | Heating conditions (during recovery) | Length after being held for one hour | Length after heating and recovery | Shape retention rate | Shape recovery rate |
|---|---|---|---|---|---|---|---|---|---|---|---|
| | mol% | °C | °C | J/g | °C | °C | °C | mm | mm | % | % |
| Example 1 | 12.6 | 54 | 229 | 1.749 | 260 | 50 | 50 | 40.64 | 25.10 | 84.7 | 85.9 |
| | | | | | | 70 | 70 | 43.91 | 24.01 | 99.6 | 90.9 |
| | | | | | | 90 | 90 | 43.38 | 24.09 | 97.2 | 90.5 |
| Example 2 | 21.0 | 31 | ND | ND | 200 | 50 | 50 | 38.24 | 22.89 | 73.8 | 96.0 |
| | | | | | | 70 | 70 | 40.28 | 22.79 | 83.1 | 96.4 |
| | | | | | | 90 | 90 | 41.71 | 23.08 | 89.6 | 95.1 |
| Example 3 | 30.8 | 22 | ND | ND | 150 | 35 | 35 | 27.52 | 22.52 | 25.1 | 97.6 |
| | | | | | | 50 | 35 | 32.43 | 24.46 | 47.4 | 88.8 |
| | | | | | | 50 | 50 | 33.33 | 23.08 | 51.5 | 95.1 |
| | | | | | | 70 | 70 | 41.84 | 26.63 | 90.2 | 79.0 |
| Comparative example 1 | 4.0 | 80.9 | 281 | 14.77 | 350 | 50 | 50 | 36.66 | 33.44 | 66.6 | 48.0 |
| | | | | | | 70 | 70 | 37.54 | 30.59 | 70.6 | 61.0 |
| | | | | | | 90 | 90 | 40.31 | 28.76 | 83.2 | 69.3 |

## Claims

1. Use of a material for a shape memory molded article, the material comprising heat-fusible perfluoro resin, wherein the glass transition temperature of the heat-fusible perfluoro resin, measured as disclosed in the description, is in the range of 10°C to 60°C, and the temperature at which the shape memory molded article exhibits shape memory capabilities is in the range of 30 to 100°C, wherein the heat-fusible perfluoro resin is a copolymer of tetrafluoroethylene and perfluorocomonomer, and the amount of the perfluorocomonomer in the heat-fusible perfluoro resin is 5 to 40 mol%, and wherein the copolymer of tetrafluoroethylene and perfluorocomonomer is selected from tetrafluoroethylene · perfluoro (alkyl vinyl ether) copolymers (PFA), tetrafluoroethylene · hexafluoropropylene copolymers (FEP), and tetrafluoroethylene · hexafluoropropylene · perfluoro (alkyl vinyl ether) copolymers.

2. The use of the material for a shape memory molded article according to claim 1, wherein the heat-fusible perfluoro resin is a tetrafluoroethylene and perfluoro (alkyl vinyl ether) copolymer (PFA).

3. The use of the material for a shape memory molded article according to claim 2, wherein the perfluoro (alkyl vinyl ether) in said PFA has an alkyl group having 1 to 5 carbon atoms.

4. The use of the material for a shape memory molded article according to claim 3, wherein the perfluoro (alkyl vinyl ether) in said PFA is selected from perfluoromethyl vinyl ether (PMVE), perfluoro (ethyl vinyl ether) (PEVE), and perfluoro (propyl vinyl ether) (PPVE).

5. The use of the material for a shape memory molded article according to claim 4, wherein the perfluoro (alkyl vinyl ether) is perfluoro (ethyl vinyl ether).

6. The use of the material for a shape memory molded article according to claims 1 through 5, wherein the heat-fusible perfluoro resin has a melting point.

7. The use of the material for a shape memory molded article according to claim 6, wherein a heat of fusion of the heat-fusible perfluoro resin, measured as disclosed in the description, is 5 J/g or less.

8. The use of the material for a shape memory molded article according to claims 1 through 7, wherein shape memory capabilities are expressed in the range of temperatures extending from $(T_g - 5)°C$ to $(T_g + 60)°C$.

9. A shape memory molded article molded from the material for a shape memory molded article as defined in any one of claims 1 to 8.

## Patentansprüche

1. Gebrauch eines Materials für einen geformten Artikel mit Formgedächtnis, wobei das Material wärmeschmelzbares Perfluorharz umfasst, wobei die Glasübergangstemperatur des wärmeschmelzbaren Perfluorharzes, gemessen wie in der Beschreibung offengelegt, in dem Bereich von 10 °C bis 60 °C liegt, und die Temperatur, bei welcher der geformte Artikel mit Formgedächtnis Formgedächtnisfähigkeiten aufweist, in dem Bereich von 30 bis 100 °C liegt,

   wobei das wärmeschmelzbare Perfluorharz ein Copolymer von Tetrafluorethylen und Perfluorcomonomer ist, und die Menge des Perfluorcomonomers in dem wärmeschmelzbaren Perfluorharz 5 bis 40 Molprozent beträgt, und
   wobei das Copolymer von Tetrafluorethylen und Perfluorcomonomer aus Tetrafluorethylen-Perfluor-(Alkylvinylether)Copolymeren (PFA), Tetrafluorethylen-Hexafluorpropylen-Copolymeren (FEP) und Tetrafluorethylen-Hexafluorpropylen-Perfluor-(Alkylvinylether)Copolymeren ausgewählt ist.

2. Gebrauch des Materials für einen geformten Artikel mit Formgedächtnis nach Anspruch 1, wobei das wärmeschmelzbare Perfluorharz ein Tetrafluorethylen- und Perfluor-(Alkylvinylether)Copolymer (PFA) ist.

3. Gebrauch des Materials für einen geformten Artikel mit Formgedächtnis nach Anspruch 2, wobei der Perfluor-(Alkylvinylether) in dem PFA eine Alkylgruppe hat, welche 1 bis 5 Kohlenstoffatome hat.

4. Gebrauch des Materials für einen geformten Artikel mit Formgedächtnis nach Anspruch 3, wobei der Perfluor-(Alkylvinylether) in dem PFA aus Perfluormethylvinylether (PMVE), Perfluor-(Ethylvinylether) (PEVE) und Perfluor-(Propylvinylether) (PPVE) ausgewählt ist.

5. Gebrauch des Materials für einen geformten Artikel mit Formgedächtnis nach Anspruch 4, wobei der Perfluor-(Alkylvinylether) ein Perfluor-(Ethylvinylether) ist.

6. Gebrauch des Materials für einen geformten Artikel mit Formgedächtnis nach den Ansprüchen 1 bis 5, wobei das wärmeschmelzbare Perfluorharz einen Schmelzpunkt hat.

7. Gebrauch des Materials für einen geformten Artikel mit Formgedächtnis nach Anspruch 6, wobei eine Schmelzwärme des wärmeschmelzenden Perfluorharzes, gemessen wie in der Beschreibung offengelegt, 5 J/g oder darunter beträgt.

8. Gebrauch des Materials für einen geformten Artikel mit Formgedächtnis nach den Ansprüchen 1 bis 7, wobei die Formgedächtnisfähigkeiten in dem Temperaturbereich ausgedrückt werden, welcher sich von $(T_g - 5)$ °C bis $(T_g + 60)$ °C erstreckt.

9. Geformter Artikel mit Formgedächtnis, geformt aus dem Material für einen Artikel mit Formgedächtnis nach einem der Ansprüche 1 bis 8.

**Revendications**

1. Utilisation d'un matériau pour un article moulé à mémoire de forme, le matériau comprenant une résine perfluorée thermofusible, dans laquelle la température de transition vitreuse de la résine perfluorée thermofusible, mesurée comme décrit dans la description, est dans la plage de 10°C à 60°C, et la température à laquelle l'article moulé à mémoire de forme présente des capacités de mémoire de forme est dans la plage de 30 à 100°C,

dans lequel la résine perfluorée thermofusible est un copolymère de tétrafluoroéthylène et de comonomère perfluoré, et la quantité du comonomère perfluoré dans la résine perfluorée thermofusible est de 5 à 40 % en moles, et
dans lequel le copolymère de tétrafluoroéthylène et de perfluorocomonomère est choisi parmi les copolymères de tétrafluoroéthylène perfluoro (éther alkylvinylique) (PFA), les copolymères de tétrafluoroéthylène hexafluoropropylène (FEP) et les copolymères de tétrafluoroéthylène · hexafluoropropylène perfluoro (éther alkylvinylique).

2. Utilisation du matériau pour un article moulé à mémoire de forme selon la revendication 1, dans laquelle la résine perfluorée thermofusible est un copolymère de tétrafluoroéthylène et de perfluoro(alkyl vinyl éther) (PFA).

3. Utilisation du matériau pour un article moulé à mémoire de forme selon la revendication 2, dans laquelle le perfluoro (éther alkylvinylique) dans ledit PFA a un groupe alkyle ayant de 1 à 5 atomes de carbone.

4. Utilisation du matériau pour un article moulé à mémoire de forme selon la revendication 3, dans laquelle le perfluoro (éther alkylvinylique) dans ledit PFA est choisi parmi l'éther perfluorométhylvinylique (PMVE), le perfluoro(éther éthylvinylique) (PEVE), et perfluoro (propyl vinyl éther) (PPVE).

5. Utilisation du matériau pour un article moulé à mémoire de forme selon la revendication 4, dans laquelle le perfluoro (éther alkyl vinylique) est le perfluoro (éther éthyl vinylique).

6. Utilisation du matériau pour un article moulé à mémoire de forme selon les revendications 1 à 5, dans laquelle la résine perfluorée thermofusible a un point de fusion.

7. Utilisation du matériau pour un article moulé à mémoire de forme selon la revendication 6, dans laquelle une chaleur de fusion de la résine perfluorée thermofusible, mesurée comme décrit dans la description, est de 5 J/g ou moins.

8. Utilisation du matériau pour un article moulé à mémoire de forme selon les revendications 1 à 7, dans laquelle les capacités de mémoire de forme sont exprimées dans la plage de températures allant de $(T_g - 5)$°C à $(T_g + 60)$°C.

9. Article moulé à mémoire de forme moulé à partir du matériau pour un article moulé à mémoire de forme tel que défini dans l'une quelconque des revendications 1 à 8.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5815294 B
- JP 3806291 B
- US 4380618 A
- JP 5588679 B
- US 3635926 A
- US 5760151 A